# EUROPEAN PATENT APPLICATION

(11) **EP 4 138 059 A2**
(43) Date of publication of application: **22.02.2023**
(21) Application number: 22213763.0
(22) Date of filing: 15.12.2022
(51) Int. Cl.: G08G 1/01, G08G 1/0962, G08G 1/0967, G08G 1/0969

(54) **METHOD, APPARATUS, AND SYSTEM FOR PROCESSING VEHICLE-ROAD COLLABORATION INFORMATION**

(30) Priority: 29.12.2021 CN 202111637317
(71) Applicant: Apollo Intelligent Connectivity (Beijing) Technology Co., Ltd., Beijing 100176 (CN)
(72) Inventor: LIU, Yang, Beijing, 100176 (CN); XIA, Na, Beijing, 100176 (CN); WANG, Ziyan, Beijing, 100176 (CN); ZHAO, Tengfei, Beijing, 100176 (CN); SUN, Jiapeng, Beijing, 100176 (CN)
(74) Representative: Nederlandsch Octrooibureau

(57) **Abstract**

The present disclosure provides a method for processing vehicle-road collaboration information and an apparatus for processing vehicle-road collaboration information, and relates to the technical field, such as computer vision and autonomous driving. A specific implementation solution includes: receiving road-end sensing information of a to-be-tested vehicle and route information of the to-be-tested vehicle; fusing preset map data based on the road-end sensing information and the route information, to generate a visualized scenario of the to-be-tested vehicle; receiving vehicle-end information and traffic control information when the to-be-tested vehicle travels on a route corresponding to the route information; extracting dynamic change data in the road-end sensing information and the vehicle-end information; and presenting traffic prompt information in the visualized scenario based on the dynamic change data and the traffic control information. This embodiment improves the efficiency of processing vehicle-road collaboration information.

## Description

### TECHNICAL FIELD

The present disclosure relates to the technical field of computers, particularly relates to the technical fields such as computer vision and autonomous driving, and more particularly relates to a method, apparatus and system for processing vehicle-road collaboration information, an electronic device, a computer readable medium, and a computer program product.

### BACKGROUND

Generally, V2X (vehicle to everything, i.e., information exchange between a vehicle and the outside world) information of an autonomous vehicle is only interacted in a data layer of the vehicle, and fails to be interacted to the outside world of the vehicle. Further, an existing autonomous vehicle generally only provides text reminders without supporting voice or graphic display, and provides a poor user experience.

### SUMMARY

A method, apparatus, and system for processing vehicle-road collaboration information, an electronic device, a computer readable medium, and a computer program product are provided.

According to a first aspect, a method for processing vehicle-road collaboration information is provided, including: receiving road-end sensing information of a to-be-tested vehicle and route information of the to-be-tested vehicle; fusing preset map data based on the road-end sensing information and the route information, to generate a visualized scenario of the to-be-tested vehicle; receiving vehicle-end information and traffic control information when the to-be-tested vehicle is travelling on a route corresponding to the route information; extracting dynamic change data in the road-end sensing information and in the vehicle-end information; and presenting traffic prompt information in the visualized scenario based on the dynamic change data and the traffic control information.

According to a second aspect, an apparatus for processing vehicle-road collaboration information is provided, including: a first receiving unit configured to receive road-end sensing information of a to-be-tested vehicle and route information of the to-be-tested vehicle; a generating unit configured to fuse preset map data based on the road-end sensing information and the route information, to generate a visualized scenario of the to-be-tested vehicle; a second receiving unit configured to receive vehicle-end information and traffic control information when the to-be-tested vehicle is travelling on a route corresponding to the route information; an extracting unit configured to extract dynamic change data in the road-end sensing information and in the vehicle-end information; and a prompting unit configured to present traffic prompt information in the visualized scenario based on the dynamic change data and the traffic control information.

According to a third aspect, a system for processing vehicle-road collaboration information is provided, including: a server, a road-end module, an on-board module, and an output device; where the server receives route information of a to-be-tested vehicle and road-end sensing information sent from the road-end module; and fuses preset map data based on the road-end sensing information and the route information, to generate a visualized scenario of the to-be-tested vehicle, and output the visualized scenario to the output device; and the server receives traffic control information and vehicle-end information sent from the vehicle module, the on-board terminal information being vehicle information when the to-be-tested vehicle is travelling on a route corresponding to the route information; extracts dynamic change data in the road-end sensing information and in the vehicle-end information; and presents traffic prompt information in the visualized scenario displayed on the output device based on the dynamic change data and the traffic control information.

According to a fourth aspect, an electronic device is provided. The electronic device includes: at least one processor; and a memory communicatively connected to the at least one processor; where the memory stores instructions executable by the at least one processor, and the instructions are executed by the at least one processor, such that the at least one processor can execute the method according to any one implementation in the first aspect.

According to a fifth aspect, a non-transitory computer readable storage medium storing computer instructions is provided, where the computer instructions are used for causing a computer to execute the method according to any one implementation in the first aspect.

According to a sixth aspect, a computer program product is provided, including a computer program, where the computer program, when executed by a processor, implements the method according to any one implementation in the first aspect.

In the method and apparatus for processing vehicle-road collaboration information provided in embodiments of the present disclosure, firstly road-end sensing information of a to-be-tested vehicle and route information of the to-be-tested vehicle are received; then preset map data is fused based on the road-end sensing information and the route information, to generate a visualized scenario of the to-be-tested vehicle; then vehicle-end information and traffic control information when the to-be-tested vehicle is travelling on a route corresponding to the route information is received; then dynamic change data in the road-end sensing information and in the vehicle-end information is extracted; and finally traffic prompt information is presented in the visualized scenario based on the dynamic change data and the traffic control information. Therefore, the visualized scenario is generated based on the road-end sensing information of the to-be-tested vehicle, thereby displaying a surrounding scenario of the to-be-tested vehicle in real time, enriching sensing data of the to-be-tested vehicle, and bringing intuitive feelings to traffic participants. Further, during the to-be-tested vehicle travels on the route, the traffic prompt information is presented in the visualized scenario based on the dynamic change data of the road-end sensing information as well as the vehicle-end information and the traffic control information, thereby prompting the traffic participants in real time, improving the perception of the traffic participants for the vehicle, and improving safety of the traffic participants when participating in traffic.

It should be understood that contents described in the SUMMARY are neither intended to identify key or important features of embodiments of the present disclosure, nor intended to limit the scope of the present disclosure. Other features of the present disclosure will become readily understood with reference to the following description.

### BRIEF DESCRIPTION OF THE DRAWINGS

The accompanying drawings are used for better understanding of the present solution, and do not impose any limitation on the present disclosure. In the drawings:
Fig. 1 is a flowchart of a method for processing vehicle-road collaboration information according to an embodiment of the present disclosure;
Fig. 2 is a schematic structural diagram of a visualized scenario in an embodiment of the present disclosure;
Fig. 3 is a schematic diagram of a weather state at a station on a route in an embodiment of the present disclosure;
Fig. 4 is a schematic structural diagram of an apparatus for processing vehicle-road collaboration information according to an embodiment of the present disclosure;
Fig. 5 is a schematic structural diagram of a system for processing vehicle-road collaboration information according to an embodiment of the present disclosure; and
Fig. 6 is a block diagram of an electronic device configured to implement the method for processing vehicle-road collaboration information in embodiments of the present disclosure.

### DETAILED DESCRIPTION OF EMBODIMENTS

Example embodiments of the present disclosure are described below with reference to the accompanying drawings, including various details of the embodiments of the present disclosure to contribute to understanding, which should be considered merely as examples. Therefore, those of ordinary skills in the art should realize that various alterations and modifications may be made to the embodiments described here without departing from the scope and spirit of the present disclosure. Similarly, for clearness and conciseness, descriptions of well-known functions and structures are omitted in the following description.

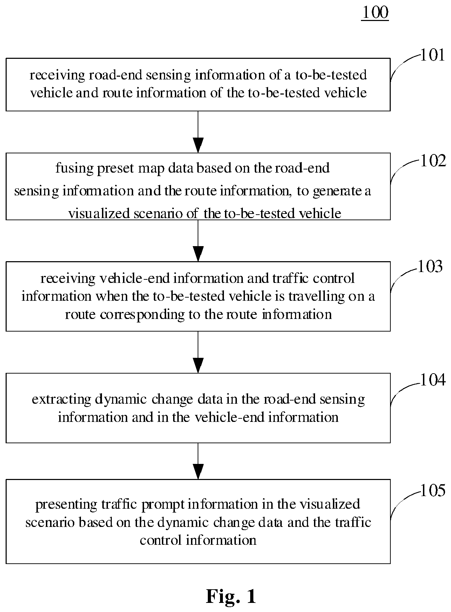

Fig. 1 shows a process 100 of a method for processing vehicle-road information according to an embodiment of the present disclosure. The method for processing vehicle-road collaboration information includes the following step 101 to step 105.

Step 101 includes receiving road-end sensing information of a to-be-tested vehicle and route information of the to-be-tested vehicle.

In the present embodiment, the to-be-tested vehicle may be an autonomous vehicle, route information for which has been acquired from a server prior to traveling. The route information is specific travel trajectory information of the to-be-tested vehicle, and the travel trajectory information includes names of stations where the to-be-tested vehicle stops or passes by, a time period in which the to-be-tested vehicle arrives at each station on a route corresponding to the route information, a stop duration at each station, and the like.

In the present embodiment, the road-end sensing information is information sensed by a road side sensor in real time, and the road side sensor includes: a high-definition camera, a lidar, and a millimeter wave radar. For example, the high-definition camera collects positions and speeds of vehicles and pedestrians within a view angle range thereof, and performs statistics on real-time traffic flow on the road; the millimeter wave radar may acquire information, such as types, positions, and speeds of the vehicles, and the positions and the speeds of the pedestrians; and the lidar may be used for detecting information such as a vehicle congestion/queuing status, a vehicle position and type, a wrong traveling direction, visibility (fog), and human and animal. Raw data obtained by these sensors will be transmitted to an executing body on which the method for processing vehicle-road collaboration information runs for data fusion.

In the present embodiment, the executing body on which the method for processing vehicle-road collaboration information runs may be a processor on the to-be-tested vehicle, or may be a cloud server that communicates with the to-be-tested vehicle, or may be an electronic device that communicates with the to-be-tested vehicle. The executing body may acquire the road-end sensing information and the route information of the to-be-tested vehicle by various approaches. For example, the executing body acquires the road-end sensing information directly from the road side sensor, and acquires the route information of the to-be-tested vehicle from an OBU (on-board unit) of the to-be-tested vehicle, or acquires stored road-end sensing information and route information from a data server.

In the present embodiment, the to-be-tested vehicle may also be an ordinary vehicle, and may be provided with a GPS (global positioning system). When a running condition of the to-be-tested vehicle in a road segment where the to-be-tested vehicle is currently located is detected, positioning information of the to-be-tested vehicle may be acquired by the GPS. The positioning information of the to-be-tested vehicle includes: running positions of the to-be-tested vehicle, countdown data of the to-be-tested vehicle at each running position, a specific time point of the to-be-tested vehicle at each running position, relevant information of the to-be-tested vehicle at each running position, and the like. The route information of the to-be-tested vehicle may be obtained based on the positioning information, and the route information may include real-time position and time information of the to-be-tested vehicle.

Step 102 includes fusing preset map data based on the road-end sensing information and the route information, to generate a visualized scenario of the to-be-tested vehicle.

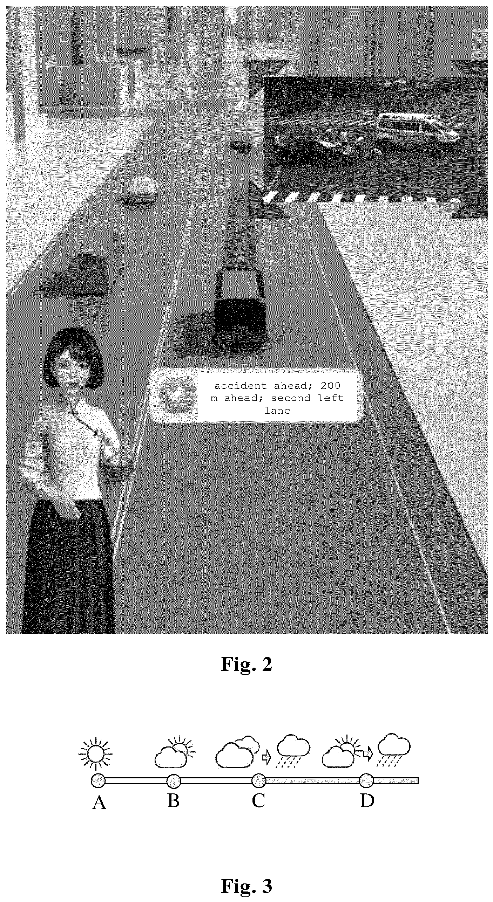

In the present embodiment, the visualized scenario is obtained by fusing the map data based on the road-end sensing information and the route information of the to-be-tested vehicle. The visualized scenario may include an image, a picture, and a three-dimensional scenario diagram, and prompt information, such as a text prompt content of a robot in Fig. 2, may be further displayed in the visualized scenario in real time. Specifically, contents displayed in the visualized scenario may be, e.g., road facilities, green scenery, and humans around a road where the to-be-tested vehicle is located, specifically as shown in Fig. 2.

In the present embodiment, the road facilities may be road traffic facilities, and the road traffic facilities may be: roadways, sidewalks, isolation barriers, gutter aprons, side stones, tactile paving, isolation piles, various threading wells, traffic lights, and the like. Each road traffic facility has its own specification requirements.

It should be noted that the visualized scenario may further support an augmented reality technology. For example, the robot in Fig. 2 is a virtual character based on the augmented reality technology. The visualized scenario may further include: an image captured by a photographing apparatus in real time after navigation using an application that supports augmented reality on the to-be-tested vehicle, such as an accident scenario diagram in Fig. 2.

Step 103 includes receiving vehicle-end information and traffic control information when the to-be-tested vehicle is travelling on a route corresponding to the route information.

In the present embodiment, the vehicle-end information is vehicle information when the to-be-tested vehicle travels on the route corresponding to the route information, and the vehicle information is information related to the to-be-tested vehicle, such as mileage, a speed, current fuel consumption, and a steering angle of the vehicle. An actual running state and performance of the vehicle may be determined based on the vehicle-end information.

In the present embodiment, the traffic control information is vehicle running control information sent from a vehicle traffic control center, where the traffic control information includes: a control signal of each traffic light on the route where the to-be-tested vehicle is located. The control signal of the traffic light includes: a command light signal, a lane light signal, and a change or control condition of a crosswalk light signal, for example, a switching time of a traffic light. The traffic control information may further include: road restriction information, for example, a speed limit of a road segment corresponding to the route information is 30 km/h.

In the present embodiment, when the to-be-tested vehicle runs on the route corresponding to the route information, the vehicle-end information changes in real time, and change information based on the vehicle-end information may provide an effective indication for the to-be-tested vehicle or other vehicles. For example, in a road segment M with a speed limit of 30 km/h, if the vehicle speed of the to-be-tested vehicle is greater than 50 km/h, the to-be-tested vehicle is determined to be a dangerous vehicle.

Step 104 includes extracting dynamic change data in the road-end sensing information and in the vehicle-end information.

In the present embodiment, the road-end sensing information is information associated with the to-be-tested vehicle, and the dynamic change data in the road-end sensing information is also data that changes dynamically relative to the to-be-tested vehicle, for example, vehicle distance variation between the to-be-tested vehicle and a surrounding vehicle, a distance between the to-be-tested vehicle and a surrounding pedestrian.

The dynamic change data of the vehicle-end information is data that changes in real time when the vehicle is in operation, such as temperatures in different areas of the vehicle, a running speed of the vehicle, and distances between the vehicle and respective objects.

Step 105 includes presenting traffic prompt information in the visualized scenario based on the dynamic change data and the traffic control information.

In the present embodiment, the presenting the traffic prompt information in the visualized scenario based on the dynamic change data and the traffic control information includes: dynamically displaying the dynamic change data and the traffic control information in the visualized scenario in real time. The dynamic change data and the traffic control information are displayed in the visualized scenario in real time, thereby providing effective traffic instructions for passengers in the to-be-tested vehicle.

Optionally, the presenting the traffic prompt information in the visualized scenario based on the dynamic change data and the traffic control information includes:
determining an accident road segment with a traffic accident on the route corresponding to the route information based on the traffic control information; determining an accident image of the accident road segment based on the dynamic change data of the road-end sensing information; presenting the accident image in the visualized scenario; calculating a distance between the to-be-tested vehicle and the accident road segment based on a vehicle speed in the dynamic change data of the vehicle-end information, determining text prompt information based on the distance and an accident road segment position in the dynamic change data of road-end sensing information, and displaying the text prompt information in the visualized scenario.

As shown in Fig. 2, the traffic prompt information in the visualized scenario includes: text prompt information "accident ahead; 200 m ahead; second left lane" and the accident image. The traffic prompt information in the visualized scenario may provide passengers with effective travel guide.

In the method for processing vehicle-road collaboration information provided in embodiments of the present disclosure, firstly road-end sensing information of a to-be-tested vehicle and route information of the to-be-tested vehicle are received; then preset map data is fused based on the road-end sensing information and the route information, to generate a visualized scenario of the to-be-tested vehicle; then vehicle-end information and traffic control information when the to-be-tested vehicle is travelling on a route corresponding to the route information is received; then dynamic change data in the road-end sensing information and in the vehicle-end information is extracted; and finally traffic prompt information is presented in the visualized scenario based on the dynamic change data and the traffic control information. Therefore, the visualized scenario is generated based on the road-end sensing information of the to-be-tested vehicle, thereby displaying a surrounding scenario of the to-be-tested vehicle in real time, enriching sensing data of the to-be-tested vehicle, and bringing intuitive feelings to traffic participants. Further, during the to-be-tested vehicle travels on the route, the traffic prompt information is presented in the visualized scenario based on the dynamic change data of the road-end sensing information as well as the vehicle-end information and the traffic control information, thereby prompting the traffic participants in real time, improving the perception of the traffic participants for the vehicle, and improving safety of the traffic participants when participating in traffic.

In some optional implementations of the present embodiment, the fusing the preset map data based on the road-end sensing information and the route information, to generate the visualized scenario of the to-be-tested vehicle includes: generating a three-dimensional geographic model of a location in which the to-be-tested vehicle is located based on the preset map data and the route information; determining a surrounding environment state and a weather state of the location in which the to-be-tested vehicle is located based on the road-end sensing information; and adding a three-dimensional scenario corresponding to the surrounding environment state and the weather state to the three-dimensional geographic model to generate a three-dimensional visualized scenario.

In the present optional implementation, the executing body on which the method for processing vehicle-road collaboration information runs extracts the surrounding environment state and the weather state of the to-be-tested vehicle in the road-end sensing information, and presents the surrounding environment state and the weather state in the visualized scenario, thus providing a reliable basis for fully displaying the surrounding state of the to-be-tested vehicle.

As shown in Fig. 2, in the three-dimensional geographic model of the to-be-tested vehicle, the surrounding environment where the to-be-tested vehicle is located is determined as an accident environment based on the road-end sensing information, an accident scenario is presented by extracting the accident image of the road-end sensing information, and the weather state of the three-dimensional geographic model is sunny (not shown in Fig. 2).

In the present optional implementation, first, the three-dimensional geographic model is generated based on the preset map data and the route information, to display a road state of a road where the to-be-tested vehicle is located from a perspective of the route; the surrounding environment state and the weather state are added to the three-dimensional geographic model based on the road-end sensing information, current environment and weather state of the to-be-tested vehicle are displayed at a specific station, and the vehicle-road collaboration information is specifically displayed in a visualized environment, thereby improving the diversity of the display of the vehicle-road collaboration information.

In some optional implementations of the present embodiment, the method further includes: determining stations of the to-be-tested vehicle based on the route information; searching for weather forecast information related to each of the stations; and predicting a weather state of each station when the to-be-tested vehicle arrives based on the weather forecast information and the vehicle-end information, and adding weather prompt information of each station to the visualized scenario.

In the present optional implementation, the weather prompt information is obtained from the predicted weather state, and the weather prompt information may be a weather state image or a weather state text. As shown in Fig. 3, the weather prompt information of station A is an image of a sunny day.

In the present embodiment, the weather forecast information may be information forecast by the Meteorological Administration in the Internet of vehicles system, and may include weather states in different places and in different time periods. The executing body on which the method for processing vehicle-road collaboration information of the present disclosure runs may determine a current weather state of each station (a weather state of each station at a current moment) based on the weather forecast information. The vehicle-end information includes: a vehicle speed, mileage, fuel consumption, and the like. A time when the to-be-tested vehicle arrives at each station may be estimated based on the vehicle-end information and the route information. The weather state of each station when the to-be-tested vehicle arrives may be predicted based on the time and the weather forecast information of each station.

Further, as shown in Fig. 3, the stations of the to-be-tested vehicle include station A, station B, station C, and station D. The station A and the station B are stations which the to-be-tested vehicle has passed by, and current weather states of the two stations are sunny and cloudy, respectively. Both the station C and the station D are stations which the to-be-tested vehicle has not passed by. The station C has two weather states, one is cloudy and the other is rainy, where a current weather state of the station C is cloudy, and a weather state of the station C is rainy when the to-be-tested vehicle arrives at the station C. The station D has two weather states, one is cloudy and the other is rainy, where a current weather state of the station D is cloudy, and a weather state of the station D is rainy when the to-be-tested vehicle arrives at the station D.

In the present optional implementation, the weather state of each site when the to-be-tested vehicle arrives is predicted based on the weather forecast information and the vehicle-end information, thereby achieving an effective estimate of the weather state in combination with the third-party information and the information of the vehicle, and improving a comfort degree of the driver and passengers.

In some optional implementations of the present embodiment, the dynamic change data in the vehicle-end information includes: a vehicle speed of the to-be-tested vehicle, and the dynamic change data in the road-end sensing information includes: distance data between the to-be-tested vehicle and a target object, and the presenting the traffic prompt information in the visualized scenario based on the dynamic change data and the traffic control information includes: presenting a first prompt information corresponding to the vehicle speed in the visualized scenario in real time; presenting a second prompt information corresponding to the distance data in the visualized scenario; determining countdown data in a current indication state of a traffic light closest to the to-be-tested vehicle and a duration of each indication state of the traffic light based on the traffic control information; calculating a time when the to-be-tested vehicle arrives at the traffic light and an indication state of the traffic light based on the countdown data, the duration of each indication state, and the vehicle speed; and presenting a third prompt information including the countdown data corresponding to the current indication state of the traffic light, a time of arriving at the traffic light, and the indication state of the traffic light to the target object at a first preset position in the visualized scenario.

In the present optional implementation, the first prompt information, the second prompt information, and the third prompt information all belong to the traffic prompt information, and each of the first prompt information, the second prompt information, and the third prompt information may be text information, or may be image information, or may be a combination of text information and image information.

In the present optional implementation, if the duration of each indication state of the traffic light (such as a red light indication state or a green light indication state) is 100 s, the current indication state of the traffic light closest to the to-be-tested vehicle is a red light indication state, countdown data of the red light is 0 s, i.e., countdown of the green light starts, and the to-be-tested vehicle may arrive at the traffic light within 50 s from the green light starting the countdown, as calculated based on the vehicle speed of the to-be-tested vehicle. Therefore, a time corresponding to the traffic light is 50 s, and the indication state of the traffic light is green light.

In the present optional implementation, the first prompt information, the second prompt information, and the third prompt information are presented in the visualized scenario, thereby guaranteeing that vehicles around or behind the to-be-tested vehicle can obtain the vehicle speed of the to-be-tested vehicle, distances between themselves and the to-be-tested vehicle, a state of a traffic light in front of the to-be-tested vehicle, a time when the to-be-tested vehicle arrives at the traffic light, and an indication state of the traffic light in real time, effectively transmitting the traffic light information to the surrounding vehicles, and improving the traffic safety. Further, the time when the to-be-tested vehicle arrives at the traffic light and the indication state of the traffic light are estimated based on the duration of each indication state of the traffic light and the vehicle speed of the to-be-tested vehicle, such that traffic participants around the to-be-tested vehicle can obtain information invisible to naked eyes, such as countdown of the traffic light, and understand driving behaviors of intelligent bus based on the global environmental conditions, thereby providing an effective response time for the surrounding vehicles to go through based on traffic signals, and guaranteeing effective start and stop of the vehicles.

In some optional implementations of the present embodiment, the dynamic change data in the road-end sensing information includes: distance data between the to-be-tested vehicle and an over-the-horizon object, and the presenting the traffic prompt information in the visualized scenario based on the dynamic change data and the traffic control information includes: presenting, in response to the distance data between the to-be-tested vehicle and the over-the-horizon object being less than a preset distance threshold, dynamic prompt information corresponding to the distance data to the over-the-horizon object at a second preset position in the visualized scenario.

In the present optional implementation, the road-end sensing information includes the distance data related to the over-the-horizon object, where the distance data may be a distance value between the to-be-tested vehicle and the over-the-horizon object collected by an over-the-horizon radar. The distance threshold is a value limiting the distance data, and the distance threshold may be determined based on a range of the over-the-horizon radar and running condition of the to-be-tested vehicle. For example, when the to-be-tested vehicle runs at a high speed, the distance threshold may be determined to be 10 km based on the range (from 900 to 3,300 kg) of the over-the-horizon radar. The dynamic prompt information belongs to the traffic prompt information, and the dynamic prompt information corresponding to the distance data may change with the change of the distance data. For example, if the distance value in the distance data changes from 1 m to 10 m, then the dynamic prompt information may change from "distance 1 m" to "distance 10 m."

In the present optional implementation, the distance data related to the over-the-horizon object is collected in real time. When the distance data is less than the preset distance threshold, the distance data may be prompted by dynamic prompt information in the visualized scenario, to fuse and display V2X data and autonomous driving data, and enable passengers to perceive a practical application effects brought by autonomous driving and vehicle-road collaboration. As such, subjective experience of the passengers will be more comfortable and safer, thereby greatly increasing the passengers' trust in autonomous driving. Further, the traffic participants outside the to-be-tested vehicle can obtain information invisible to naked eyes, such as over-the-horizon warning, and understand the driving behavior of intelligent bus based on the global environmental conditions.

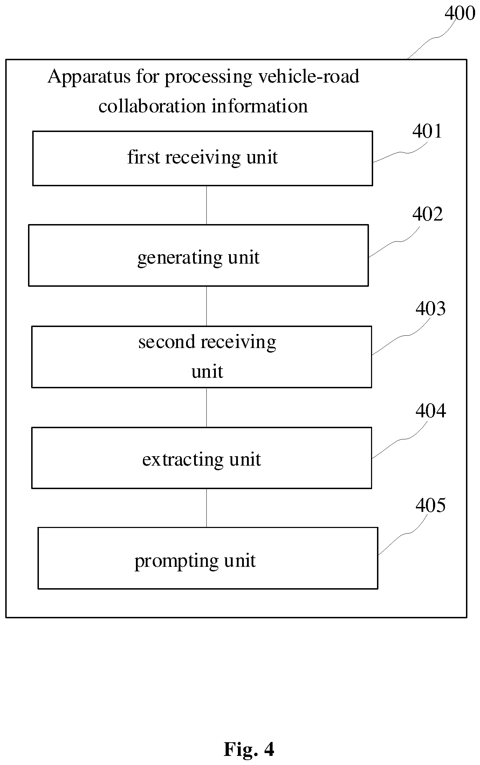

Further referring to Fig. 4, as an implementation of the method shown in the above figures, an embodiment of the present disclosure provides an apparatus for processing vehicle-road collaboration information. The embodiment of the apparatus corresponds to the embodiment of the method shown in Fig. 1. The apparatus may be specifically applied to various electronic devices.

As shown in Fig. 4, the apparatus 400 for processing vehicle-road collaboration information provided in the present embodiment includes: a first receiving unit 401, a generating unit 402, a second receiving unit 403, an extracting unit 404, and a prompting unit 405. The first receiving unit 401 may be configured to receive road-end sensing information of a to-be-tested vehicle and route information of the to-be-tested vehicle. The generating unit 402 may be configured to fuse preset map data based on the road-end sensing information and the route information, to generate a visualized scenario of the to-be-tested vehicle. The second receiving unit 403 may be configured to receive vehicle-end information and traffic control information when the to-be-tested vehicle is travelling on a route corresponding to the route information. The extracting unit 404 may be configured to extract dynamic change data in the road-end sensing information and in the vehicle-end information. The prompting unit 405 may be configured to present traffic prompt information in the visualized scenario based on the dynamic change data and the traffic control information.

The related description of step 101, step 102, step 103, step 104, and step 105 in the corresponding embodiment of Fig. 1 may be referred to for specific processing of the first receiving unit 401, the generating unit 402, the second receiving unit 403, the extracting unit 404, and the prompting unit 405 in the apparatus 400 for processing vehicle-road collaboration information and the technical effects thereof in the present embodiment, respectively. The description will not be repeated here.

In some optional implementations of the present embodiment, the generating unit 402 includes: a generating module (not shown in the figure), a determining module (not shown in the figure), and an adding module (not shown in the figure). The generating module may be configured to generate a three-dimensional geographic model of a location in which the to-be-tested vehicle is located based on the preset map data and the route information. The determining module may be configured to determine a surrounding environment state and a weather state of the location in which the to-be-tested vehicle is located based on the road-end sensing information. The adding module may be configured to add a three-dimensional scenario corresponding to the surrounding environment state and the weather state to the three-dimensional geographic model to generate a three-dimensional visualized scenario.

In some optional implementations of the present embodiment, the apparatus 400 further includes: a station determining unit (not shown in the figure), a searching unit (not shown in the figure), and a predicting unit (not shown in the figure). The station determining unit may be configured to determine stations of the to-be-tested vehicle based on the route information. The searching unit may be configured to search for weather forecast information related to each of the stations. The predicting unit may be configured to predict a weather state of each station when the to-be-tested vehicle arrives based on the weather forecast information and the vehicle-end information, and add weather prompt information of each station to the visualized scenario.

In some optional implementations of the present embodiment, the dynamic change data in the vehicle-end information includes: a vehicle speed of the to-be-tested vehicle, and the dynamic change data in the road-end sensing information includes: distance data between the to-be-tested vehicle and a target object, and the presenting unit 405 includes: a first presenting module (not shown in the figure), a second presenting module (not shown in the figure), a time determining module (not shown in the figure), a time calculating module (not shown in the figure), and a prompting module (not shown in the figure). The first presenting module may be configured to present a first prompt information corresponding to the vehicle speed in the visualized scenario in real time. The second presenting module may be configured to present a second prompt information corresponding to the distance data in the visualized scenario. The time determining module may be configured to determine countdown data of a current indication state of a traffic light closest to the to-be-tested vehicle and a duration of each indication state of the traffic light based on the traffic control information. The time calculating module may be configured to calculate time when the to-be-tested vehicle arrives at the traffic light and an indication state of the traffic light based on the countdown data, the duration of each indication state, and the vehicle speed. The prompting module may be configured to present a third prompt information including the countdown data corresponding to the current indication state of the traffic light, the time when the to-be-tested vehicle arrives at the traffic light, and the indication state of the traffic light to the target object at a first preset position in the visualized scenario.

In some optional implementations of the present embodiment, the dynamic change data in the road-end sensing information includes: distance data between the to-be-tested vehicle and an over-the-horizon object, and the presenting unit 405 is further configured to present, in response to the distance data between the to-be-tested vehicle and the over-the-horizon object being less than a preset distance threshold, dynamic prompt information corresponding to the distance data to the over-the-horizon object at a second preset position in the visualized scenario.

The apparatus for processing vehicle-road collaboration information provided in the embodiment of the present disclosure first receives, by a first receiving unit 401, road-end sensing information of a to-be-tested vehicle and route information of the to-be-tested vehicle; then fuses, by a generating unit 402, preset map data based on the road-end sensing information and the route information, to generate a visualized scenario of the to-be-tested vehicle; then receives, by a second receiving unit 403, vehicle-end information and traffic control information when the to-be-tested vehicle is travelling on a route corresponding to the route information; then extracts, by an extracting unit 404, dynamic change data in the road-end sensing information and in the vehicle-end information; and finally presents, by a prompting unit 405, traffic prompt information in the visualized scenario based on the dynamic change data and the traffic control information. Therefore, the visualized scenario is generated based on the road-end sensing information of the to-be-tested vehicle, thereby displaying a surrounding scenario of the to-be-tested vehicle in real time, enriching sensing data of the to-be-tested vehicle, and bringing intuitive feelings to traffic participants. Further, during the to-be-tested vehicle travels on the route, the traffic prompt information is presented in the visualized scenario based on the dynamic change data of the road-end sensing information as well as the vehicle-end information and the traffic control information, thereby prompting the traffic participants in real time, improving the perception of the traffic participants for the vehicle, and improving safety of the traffic participants when participating in traffic.

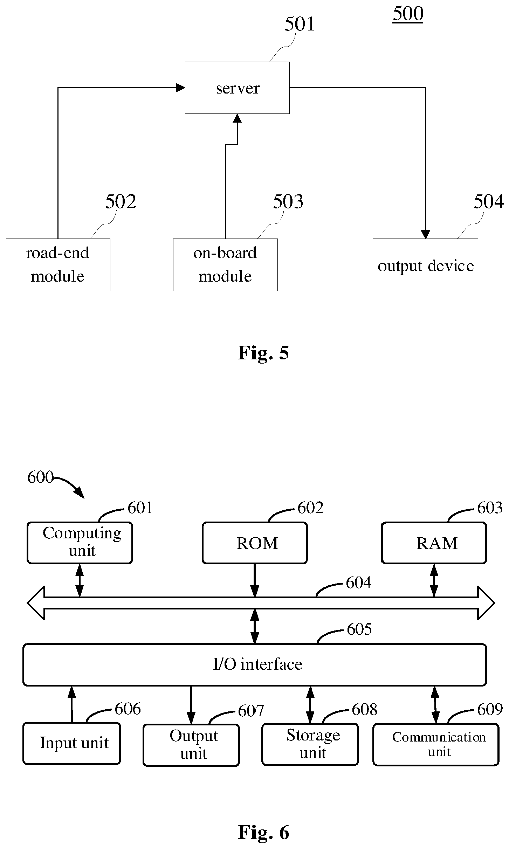

Further referring to Fig. 5, as an implementation of the method shown in the above figures, an embodiment of the present disclosure provides a system for processing vehicle-road collaboration information. The embodiment of the system corresponds to the embodiment of the method shown in Fig. 1. The system may be specifically applied to various electronic devices.

As shown in Fig. 5, the system 500 for processing vehicle-road collaboration information provided in the present embodiment includes: a server 501, a road-end module 502, an on-board module 503, and an output device 504. The server 501 receives route information of a to-be-tested vehicle and road-end sensing information sent from the road-end module 502; and fuses preset map data based on the road-end sensing information and the route information, to generate a visualized scenario of the to-be-tested vehicle, and output the visualized scenario to the output device 504.

The server 501 receives traffic control information and vehicle-end information sent from the on-board module 503, the vehicle-end information being vehicle information when the to-be-tested vehicle is travelling on a route corresponding to the route information; extracts dynamic change data in the road-end sensing information and in the vehicle-end information; and presents traffic prompt information in the visualized scenario displayed on the output device 504 based on the dynamic change data and the traffic control information.

In the present embodiment, the on-board module 503, the road-end module 502, and the output device 504 may be modules on the to-be-tested vehicle, where the road-end module 502 may be a road side unit (RSU) of the to-be-tested vehicle, the on-board module 503 may be an OBU unit of the to-be-tested vehicle, and the on-board module is a microwave apparatus that communicates with the road side unit using a DSRC (dedicated short range communication) technology.

The related description of step 101, step 102, step 103, step 104, and step 105 in the corresponding embodiment of Fig. 1 may be referred to for specific processing of the server 501 in the apparatus 500 for processing vehicle-road collaboration information and the technical effects thereof in the present embodiment, respectively. The description will not be repeated here.

In some optional implementations of the present embodiment, the output device 504 includes: an exterior screen and an exterior speaker of the to-be-tested vehicle.

The system for processing vehicle-road collaboration information provided in the present optional implementation may be applied to autonomous driving and vehicle-road collaboration, is a system for displaying vehicle-road collaboration information by the exterior screen and the exterior speaker, and specifically includes a server, a road-end module, an on-board module, an exterior screen, and an exterior speaker.

The road-end module includes: a road-end sensing unit and a signal control and road side unit (RSU).

The on-board module: may acquire vehicle information in real time, and may further include a communication unit that communicates with the road-end module in real time.

The server: controls a vehicle to travel safely in accordance with traffic rules on a specific route based on the multi-sensor fusion based perception and localized decision planning. When a to-be-tested vehicle equipped with a V2X on-board module (OBU) travels to an intersection covered by a V2X device, the RSU will transfer road-end sensing or road-endcomputed data, information control system and other traffic control information to a vehicle-end OBU via a wireless network (e.g., 4G/5G/wifi).

The exterior screen and the exterior speaker: When receiving the V2X road-end sensing information, the server reminds vehicles behind the vehicle and pedestrians outside the vehicle of the vehicle-road collaboration information in real time by the exterior screen and the exterior speaker. When receiving prompt information such as a speed limit and a traffic light, the server presents traffic prompt information, such as text, pictures, and images, on the visualized scenario displayed on the exterior screen, and broadcasts a corresponding voice by the exterior speaker as required. When receiving an expected reminder with direction information, the server presents traffic prompt information, such as a danger type, a direction, and suggestion information, in the visualized scenario displayed on the exterior screen, and broadcasts a corresponding voice, such as construction warning or collision warning, by the exterior speaker as required.

In the present optional implementation, the output device serves as a display module of the to-be-tested vehicle, and performs effect display by images, text, pictures, and sounds, thereby improving the effectiveness of the display of the vehicle-road collaboration information.

In the system for processing vehicle-road collaboration information provided in the present embodiment, the server outputs the visualized scenario on the output device, and presents the traffic prompt information in the visualized scenario, thereby prompting traffic participants in real time, improving the perception of the traffic participants for the vehicle, and improving the safety of the traffic participants participating in traffic.

In the technical solution of the present disclosure, the collection, storage, use, processing, transfer, provision, and disclosure of personal information of a user involved are in conformity with relevant laws and regulations, and do not violate public order and good customs.

According to an embodiment of the present disclosure, the present disclosure further provides an electronic device, a readable storage medium, and a computer program product.

Fig. 6 shows a schematic block diagram of an example electronic device 600 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may also represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 6, the device 600 includes a computing unit 601, which may execute various appropriate actions and processes in accordance with a computer program stored in a read-only memory (ROM) 602 or a computer program loaded into a random-access memory (RAM) 603 from a storage unit 608. The RAM 603 may further store various programs and data required by operations of the device 600. The computing unit 601, the ROM 602, and the RAM 603 are connected to each other through a bus 604. An input/output (I/O) interface 605 is also connected to the bus 604.

A plurality of components in the device 600 is connected to the I/O interface 605, including: an input unit 606, such as a keyboard and a mouse; an output unit 607, such as various types of displays and speakers; a storage unit 608, such as a magnetic disk and an optical disk; and a communication unit 609, such as a network card, a modem, and a wireless communication transceiver. The communication unit 609 allows the device 600 to exchange information/data with other devices via a computer network such as the Internet and/or various telecommunication networks.

The computing unit 601 may be various general-purpose and/or special-purpose processing components having a processing power and a computing power. Some examples of the computing unit 601 include, but are not limited to, a central processing unit (CPU), a graphics processing unit (GPU), various special-purpose artificial intelligence (AI) computing chips, various computing units running a machine learning model algorithm, a digital signal processor (DSP), and any appropriate processor, controller, micro-controller, and the like. The computing unit 601 executes various methods and processes described above, such as the method for processing vehicle-road collaboration information. For example, in some embodiments, the method for processing vehicle-road collaboration information may be implemented as a computer software program that is tangibly included in a machine-readable medium, such as the storage unit 608. In some embodiments, some or all of the computer programs may be loaded and/or installed onto the device 600 via the ROM 602 and/or the communication unit 609. When the computer program is loaded into the RAM 603 and executed by the computing unit 601, one or more steps of the method for processing vehicle-road collaboration information described above may be executed. Alternatively, in other embodiments, the computing unit 601 may be configured to execute the method for processing vehicle-road collaboration information by any other appropriate approach (e.g., by means of firmware).

Various implementations of the systems and technologies described above herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), computer hardware, firmware, software, and/or a combination thereof. The various implementations may include: an implementation in one or more computer programs that are executable and/or interpretable on a programmable system including at least one programmable processor, which may be a special-purpose or general-purpose programmable processor, and may receive data and instructions from, and transmit data and instructions to, a storage system, at least one input apparatus, and at least one output device.

Program codes for implementing the method of the present disclosure may be compiled using any combination of one or more programming languages. The program codes may be provided to a processor or controller of a general-purpose computer, a special-purpose computer, or other programmable apparatuses for processing vehicle-road collaboration information, such that the program codes, when executed by the processor or controller, cause the functions/operations specified in the flow charts and/or block diagrams to be implemented. The program codes may be completely executed on a machine, partially executed on a machine, executed as a separate software package on a machine and partially executed on a remote machine, or completely executed on a remote machine or server.

In the context of the present disclosure, the machine-readable medium may be a tangible medium which may contain or store a program for use by, or used in combination with, an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any appropriate combination of the above. A more specific example of the machine-readable storage medium will include an electrical connection based on one or more pieces of wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, an optical storage device, a magnetic storage device, or any appropriate combination of the above.

To provide interaction with a user, the systems and technologies described herein may be implemented on a computer that is provided with: a display apparatus (e.g., a CRT (cathode ray tube) or a LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or haptic feedback); and an input may be received from the user in any form (including an acoustic input, a voice input, or a tactile input).

The systems and technologies described herein may be implemented in a computing system (e.g., as a data server) that includes a back-end component, or a computing system (e.g., an application server) that includes a middleware component, or a computing system (e.g., a user computer with a graphical user interface or a web browser through which the user can interact with an implementation of the systems and technologies described herein) that includes a front-end component, or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and usually interact via a communication network. The relationship between the client and the server arises by virtue of computer programs that run on corresponding computers and have a client-server relationship with each other. The server may be a cloud server, a distributed system server, or a server combined with a blockchain.

It should be understood that the various forms of processes shown above may be used to reorder, add, or delete steps. For example, the steps disclosed in the present disclosure may be executed in parallel, sequentially, or in different orders, as long as the desired results of the technical solutions disclosed in the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for processing vehicle-road collaboration information, comprising:
receiving (101) road-end sensing information of a to-be-tested vehicle and route information of the to-be-tested vehicle;
fusing (102) preset map data based on the road-end sensing information and the route information, to generate a visualized scenario of the to-be-tested vehicle;
receiving (103) vehicle-end information and traffic control information when the to-be-tested vehicle is traveling on a route corresponding to the route information;
extracting (104) dynamic change data in the road-end sensing information and in the vehicle-end information; and
presenting (105) traffic prompt information in the visualized scenario based on the dynamic change data and the traffic control information.

2. The method according to claim 1, wherein fusing the preset map data based on the road-end sensing information and the route information, to generate the visualized scenario of the to-be-tested vehicle comprises:
generating a three-dimensional geographic model of a location in which the to-be-tested vehicle is located based on the preset map data and the route information;
determining a surrounding environment state and a weather state of the location in which the to-be-tested vehicle is located based on the road-end sensing information; and
adding a three-dimensional scenario corresponding to the surrounding environment state and the weather state to the three-dimensional geographic model to generate a three-dimensional visualized scenario.

3. The method according to claim 2, wherein the method further comprises:
determining stations of the to-be-tested vehicle based on the route information;
searching for weather forecast information related to each of the stations; and
predicting a weather state of each station when the to-be-tested vehicle arrives based on the weather forecast information and the vehicle-end information, and adding weather prompt information of each station to the visualized scenario.

4. The method according to claim 1, wherein the dynamic change data in the vehicle-end information comprises: a vehicle speed of the to-be-tested vehicle, and the dynamic change data in the road-end sensing information comprises: distance data between the to-be-tested vehicle and a target object, and presenting the traffic prompt information in the visualized scenario based on the dynamic change data and the traffic control information comprises:
presenting a first prompt information corresponding to the vehicle speed in the visualized scenario in real time;
presenting a second prompt information corresponding to the distance data in the visualized scenario;
determining countdown data of a current indication state of a traffic light closest to the to-be-tested vehicle and a duration of each indication state of the traffic light based on the traffic control information;
calculating a time when the to-be-tested vehicle arrives at the traffic light and an indication state of the traffic light based on the countdown data, the duration of each indication state, and the vehicle speed; and
presenting a third prompt information comprising the countdown data corresponding to the current indication state of the traffic light, the time when the to-be-tested vehicle arrives at the traffic light, and the indication state of the traffic light to the target object at a first preset position in the visualized scenario.

5. The method according to claim 1, wherein the dynamic change data in the road-end sensing information comprises: distance data between the to-be-tested vehicle and an over-the-horizon object, and presenting the traffic prompt information in the visualized scenario based on the dynamic change data and the traffic control information comprises:
presenting, in response to the distance data between the to-be-tested vehicle and the over-the-horizon object being less than a preset distance threshold, dynamic prompt information corresponding to the distance data to the over-the-horizon object at a second preset position in the visualized scenario.

6. An apparatus for processing vehicle-road collaboration information, comprising:
a first receiving unit (401) configured to receive road-end sensing information of a to-be-tested vehicle and route information of the to-be-tested vehicle;
a generating unit (402) configured to fuse preset map data based on the road-end sensing information and the route information, to generate a visualized scenario of the to-be-tested vehicle;
a second receiving unit (403) configured to receive vehicle-end information and traffic control information when the to-be-tested vehicle is traveling on a route corresponding to the route information;
an extracting unit (404) configured to extract dynamic change data in the road-end sensing information and in the vehicle-end information; and
a prompting unit (405) configured to present traffic prompt information in the visualized scenario based on the dynamic change data and the traffic control information.

7. The apparatus according to claim 6, wherein the generating unit comprises:
a generating module configured to generate a three-dimensional geographic model of a location in which the to-be-tested vehicle is located based on the preset map data and the route information;
a determining module configured to determine a surrounding environment state and a weather state of a location in which the to-be-tested vehicle is located based on the road-end sensing information; and
an adding module configured to add a three-dimensional scenario corresponding to the surrounding environment state and the weather state to the three-dimensional geographic model to generate a three-dimensional visualized scenario.

8. The apparatus according to claim 7, wherein the apparatus further comprises:
a station determining unit configured to determine stations of the to-be-tested vehicle based on the route information;
a searching unit configured to search for weather forecast information related to each of the stations; and
a predicting unit configured to predict a weather state of each station when the to-be-tested vehicle arrives based on the weather forecast information and the vehicle-end information, and add weather prompt information of each station to the visualized scenario.

9. The apparatus according to claim 6, wherein the dynamic change data in the vehicle-end information comprises: a vehicle speed of the to-be-tested vehicle, and the dynamic change data in the road-end sensing information comprises: distance data between the to-be-tested vehicle and a target object, and the presenting unit comprises:
a first presenting module configured to present a first prompt information corresponding to the vehicle speed in the visualized scenario in real time;
a second presenting module configured to present a second prompt information corresponding to the distance data in the visualized scenario;
a time determining module configured to determine countdown data of a current indication state of a traffic light closest to the to-be-tested vehicle and a duration of each indication state of the traffic light based on the traffic control information;
a time calculating module configured to calculate time when the to-be-tested vehicle arrives at the traffic light and an indication state of the traffic light based on the countdown data, the duration of each indication state, and the vehicle speed; and
a prompting module configured to present a third prompt information comprising the countdown data corresponding to the current indication state of the traffic light, the time when the to-be-tested vehicle arrives at the traffic light, and the indication state of the traffic light to the target object at a first preset position in the visualized scenario.

10. The apparatus according to claim 6, wherein the dynamic change data in the road-end sensing information comprises: distance data between the to-be-tested vehicle and an over-the-horizon object, and the presenting unit is further configured to present, in response to the distance data between the to-be-tested vehicle and the over-the-horizon object being less than a preset distance threshold, dynamic prompt information corresponding to the distance data to the over-the-horizon object at a second preset position in the visualized scenario.

11. A system for processing vehicle-road collaboration information, comprising: a server (501), a road-end module (502), an on-board module (503), and an output device (504); wherein
the server (501) receives route information of a to-be-tested vehicle and road-end sensing information sent from the road-end module (502); and fuses preset map data based on the road-end sensing information and the route information, to generate a visualized scenario of the to-be-tested vehicle, and output the visualized scenario to the output device (504); and
the server (501) receives traffic control information and vehicle-end information sent from the on-board module (503), the vehicle-end information being vehicle information when the to-be-tested vehicle is travelling on a route corresponding to the route information; extracts dynamic change data in the road-end sensing information and in the vehicle-end information; and presents traffic prompt information in the visualized scenario displayed by the output device (504) based on the dynamic change data and the traffic control information.

12. The system according to claim 11, wherein the output device (504) comprises: an exterior screen and an exterior speaker of the to-be-tested vehicle.

13. An electronic device, comprising:
at least one processor; and
a memory communicatively connected to the at least one processor; wherein
the memory stores instructions executable by the at least one processor, and the instructions are executed by the at least one processor, such that the at least one processor can execute the method according to any one of claims 1 to 5.

14. A non-transitory computer readable storage medium storing computer instructions, wherein the computer instructions are used for causing a computer to execute the method according to any one of claims 1 to 5.

15. A computer program product, comprising a computer program, wherein the computer program, when executed by a processor, implements the method according to any one of claims 1 to 5.
